# EUROPEAN PATENT APPLICATION

(11) **EP 4 503 453 A1**
(43) Date of publication of application: **05.02.2025**
(21) Application number: 24191335.9
(22) Date of filing: 29.07.2024
(51) Int. Cl.: H04B 1/10, H04B 17/20, H04W 74/0808

(54) **RADIO STATION AND CARRIER SENSING METHOD**

(30) Priority: 31.07.2023 JP 2023124938
(71) Applicant: Icom Incorporated, Osaka 547-0004 (JP)
(72) Inventor: KOTERA, Hiroshi, Osaka, 547-0004 (JP)
(74) Representative: v. Bezold & Partner Patentanwälte - PartG mbB

(57) **Abstract**

A detector (16) included in a radio station (1) detects a signal level, at a designated transmission frequency, of a real signal obtained as a result of digitally converting an electric signal derived from a radio wave captured by an antenna (10) by applying a time window specified according to a length of time of a beacon used in wireless communication to the real signal. A determiner (17) determines whether a transmission band containing the transmission frequency is used for the wireless communication from the detected signal level.

## Description

This application relates generally to a radio station and a carrier sensing method.

Wireless communication equipment that connects to a wireless local area network (WLAN) performs wireless communication in a 2.4 GHz band or a 5 GHz band that is allocated for WLAN communication. Wireless communication equipment detects an available channel in order to avoid interference with wireless communication performed by another wireless communication equipment. An example of wireless communication equipment of this type is disclosed in Unexamined Japanese Patent Application Publication No.2005-101787.

A receiving device disclosed in Unexamined Japanese Patent Application Publication No.2005-101787 estimates whether a channel is in use or not from a reception level of a received channel signal.

A radio station according to a first aspect of the present disclosure includes:
a detector to detect a signal level, at a designated transmission frequency, of a real signal obtained as a result of digitally converting an electric signal derived from a radio wave captured by an antenna by applying a time window specified according to a length of time of a beacon used in wireless communication to the real signal; and
a determiner to determine whether a transmission band containing the transmission frequency is used for the wireless communication from the signal level detected by the detector.

Preferably, the detector detects the signal level by applying the time window having a length equal to a minimum value of the length of time of the beacon output by wireless communication equipment that performs the wireless communication to the real signal.

Preferably, the detector detects the signal level by applying the time window specified according to the length of time of the beacon used in WLAN communication in accordance with Orthogonal Frequency Division Multiplexing to the real signal.

Preferably, the radio station further includes:
a reception processing circuit to digitally convert the electric signal derived from the radio wave captured by the antenna, down-convert the resultant signal, and generate an IF signal in an intermediate frequency band;
a first variable-frequency oscillator to output a first reference signal;
an extractor to perform complex frequency conversion on the IF signal using the first reference signal and band-limit the resultant signal within a specified bandwidth centered at a frequency of the first reference signal to generate a first complex signal; and
a frequency controller to adjust the frequency of the first reference signal according to the designated transmission frequency, wherein
the detector detects the signal level by applying the time window to the real signal obtained from the first complex signal.

Preferably, the radio station further includes:
a plurality of second variable-frequency oscillators to respectively output second reference signals each having a different frequency, wherein
the radio station comprises a plurality of the detectors each acquiring the second reference signal from a corresponding one of the second variable-frequency oscillators,
the frequency controller adjusts a frequency of the second reference signal output from each of the second variable-frequency oscillators according to the transmission frequency and a bandwidth of the transmission band containing the transmission frequency,
the detectors each detects the signal level by applying the time window to the real signal obtained as a result of complex frequency conversion on the first complex signal using the second reference signal, and
the determiner determines whether the transmission band is used for the wireless communication from the signal level detected by each of the detectors.

Preferably, the frequency controller adjusts the frequency of the second reference signal output from any one of the second variable-frequency oscillators in such a way that a complex signal obtained as a result of complex frequency conversion on the first complex signal using the second reference signal exhibits a spectrum centered at a frequency component of the transmission frequency.

Preferably, the radio station further includes an operation device to accept designation of the transmission frequency as well as an instruction to perform transmission in one of a narrowband mode and a wideband mode in which the transmission band is wider than in the narrowband mode, wherein
when transmission in the wideband mode is designated at the operation device, the determiner determines whether the transmission band is used for the wireless communication from the signal level detected by each of the detectors, and when transmission in the narrowband mode is designated at the operation device, the determiner determines whether the transmission band is used for the wireless communication from the signal level detected by applying the time window to the real signal obtained from the complex signal exhibiting a spectrum centered at a frequency component of the transmission frequency.

A carrier sensing method according to a second aspect of the present disclosure is a carrier sensing method performed by a radio station and includes:
detecting a signal level, at a designated transmission frequency, of a real signal obtained as a result of digitally converting an electric signal derived from a radio wave captured by an antenna by applying a time window specified according to a length of time of a beacon used in wireless communication to the real signal, and
determining whether a transmission band containing the transmission frequency is used for the wireless communication from the signal level.

The radio station according to the present disclosure detects a signal level of a real signal by using a time window specified according to a length of time of a beacon used in wireless communication, which enables accuracy of carrier sensing to improve.

A more complete understanding of this application can be obtained when the following detailed description is considered in conjunction with the following drawings, in which:
FIG. 1 is a block diagram illustrating a configuration of a radio station according to Embodiment 1 of the present disclosure;
FIG. 2 is a block diagram illustrating a configuration of a carrier sensing device according to Embodiment 1 of the present disclosure;
FIG. 3 is a flowchart illustrating an example operation of carrier-sense processing performed by the radio station according to Embodiment 1;
FIG. 4 is a diagram illustrating an example of a relation between a transmission band of a radio station according to Embodiment 2 and spectra of subcarriers in WLAN communication;
FIG. 5 is a block diagram illustrating a portion of a configuration of the radio station according to Embodiment 2;
FIG. 6 is a block diagram illustrating a configuration of a bandwidth regulator according to Embodiment 2 of the present disclosure;
FIG. 7 is a block diagram illustrating a configuration of a carrier sensing device according to Embodiment 2 of the present disclosure;
FIG. 8 is a block diagram illustrating a variation example of the configuration of the radio station according to Embodiment 2;
FIG. 9 is a diagram illustrating a hardware configuration of the radio station according to the embodiments of the present disclosure;
FIG. 10 is a diagram illustrating a variation example of the hardware configuration of the radio station according to the embodiments; and
FIG. 11 is a diagram illustrating an example implementation of the radio station according to the embodiments.

In wireless communication, some type of communication takes priority in a predetermined frequency band. For example, in a predetermined frequency band, a radio station that performs amateur radio communication may be required not to cause harmful interference with wireless communication performed by another wireless communication equipment that connects to a WLAN. Specifically, when a 2.4 GHz band or a 5 GHz band is used for amateur radio communication, in order to avoid interference with wireless communication performed by another wireless communication equipment, such a radio station needs to perform carrier sensing for determining whether another wireless communication equipment is performing wireless communication in a transmission band containing a transmission frequency. For example, while a maximum output power of a WLAN device ranges from several tens of milliwatts to several hundreds of milliwatts, an output power of a radio station that performs amateur radio communication may be several watts. Therefore, a radio wave output by the radio station that performs amateur radio communication may affect a WLAN device that is placed apart. In order to avoid interference with wireless communication performed by another wireless communication equipment, accuracy of carrier sensing by a radio station that performs amateur radio communication needs to be improved.

The present disclosure has been accomplished in view of circumstances described above, and it is an objective of the present disclosure to provide a radio station and a carrier sensing method that enable accuracy of carrier sensing to improve.

A radio station and a carrier sensing method according to embodiments of the present disclosure are described in detail below with reference to the drawings. In each figure, same or equivalent elements are denoted by same reference signs.

### Embodiment 1

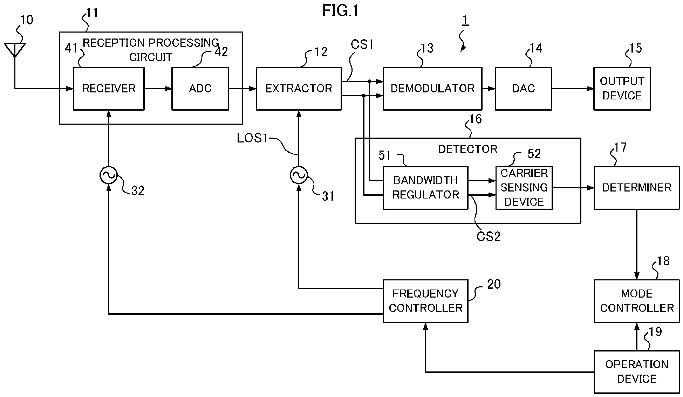

A radio station 1 illustrated in FIG. 1 is a radio station that can perform communication in a 2.4 GHz band or a 5 GHz band that is allocated for WLAN communication. In a 2.4 GHz band or a 5 GHz band, WLAN communication in accordance with Orthogonal Frequency Division Multiplexing (OFDM) is performed. When the radio station 1 is instructed to perform transmission in a 2.4 GHz band or a 5 GHz band, in order to avoid interference in the 2.4 GHZ band or the 5 GHz band with WLAN communication performed by wireless communication equipment, the radio station 1 performs carrier sensing to determine whether other wireless communication, WLAN communication to be specific, is performed in a transmission band containing a designated transmission frequency. The radio station 1 detects a signal level, at the transmission frequency, by using a time window specified according to a length of time of a beacon used in wireless communication, and determines whether the transmission band is used for wireless communication from the signal level.

The radio station 1 includes: an antenna 10; a reception processing circuit 11; an extractor 12; a demodulator 13; a digital-to-analog converter (DAC) 14; an output device 15; a detector 16; a determiner 17; a mode controller 18; an operation device 19; a frequency controller 20; a first oscillator 31; and a radio frequency (RF) oscillator 32.

The antenna 10 captures a radio wave from wireless communication equipment, such as a radio station or a relay device, and outputs an electric signal derived from the captured radio wave to the reception processing circuit 11.

The reception processing circuit 11 digitally converts the electric signal acquired from the antenna 10, down-converts the resultant signal, and generates an intermediate frequency (IF) signal in an intermediate frequency band. More specifically, the reception processing circuit 11 includes a receiver 41 and an analog-to-digital converter (ADC) 42.

The receiver 41 performs signal processing on the electric signal acquired from the antenna 10, such as filtering, attenuation, amplification, or frequency conversion. For example, the receiver 41 includes a filter, a band pass filter (BPF) to be specific, an attenuator, a low noise amplifier (LNA), a mixer, and the like.

The receiver 41 multiplies the electric signal that has passed through the attenuator and the LNA after filtering at the BPF by an RF reference signal output by the RF oscillator 32 using a mixer and causes a frequency of the electric signal to be within a frequency band that can be processed by the ADC 42. For example, the receiver 41 performs signal processing described above on an electric signal of 5.6 GHz to convert the electric signal of 5.6 GHz into an electric signal of several hundred megahertz, for example, an electric signal of 300 MHz, and outputs the electric signal after conversion to the ADC 42.

The ADC 42 digitally converts the electric signal obtained after signal processing at the receiver 41, and down-converts the signal obtained after digital conversion to generate an IF signal. For example, the IF signal is a real signal having a frequency less than 100 MHz. The ADC 42 outputs the IF signal to the extractor 12.

The extractor 12 performs complex frequency conversion on the IF signal using a first reference signal LOS1 output from the first variable-frequency oscillator 31 and band-limits the resultant signal within a specified bandwidth centered at a frequency of the first reference signal LOS1 to generate a first complex signal CS1, which is an in-phase/quadrature-phase (I/Q) signal. The extractor 12 outputs the first complex signal CS1 to the demodulator 13 and the detector 16.

The extractor 12 includes, for example, a phase shifter, a complex mixer, a filter, and the like. More specifically, the extractor 12 performs complex frequency conversion on the IF signal using the first reference signal LOS1 and generates a complex signal exhibiting a spectrum centered at a frequency component of the first reference signal LOS1. For example, the extractor 12 generates a complex signal exhibiting a spectrum for which the frequency of the first reference signal LOS1 is used as reference of 0 Hz. By band-limiting the complex signal within the specified bandwidth centered at 0 Hz, the first complex signal CS1 is obtained. Note that a filter for limiting a signal within a specified bandwidth centered at 0 Hz can be obtained by combining a low pass filter (LPF) for positive frequencies and a LPF for negative frequencies.

The demodulator 13 performs demodulation by means of a specified demodulation method after performing band-limiting, downsampling, and the like on the first complex signal CS1 to generate a demodulated signal, which is a real signal, and transmits the demodulated signal to the DAC 14.

The DAC 14 performs analog conversion on the demodulated signal acquired from the demodulator 13 to generate an analog signal, and transmits the analog signal to the output device 15.

The output device 15, for example, a speaker, outputs the analog signal acquired from the DAC 14.

The detector 16 detects a signal level of the real signal obtained from the first complex signal CS1. The detector 16 outputs the detected signal level to the determiner 17.

More specifically, the detector 16 includes a bandwidth regulator 51 and a carrier sensing device 52. The bandwidth regulator 51 band-limits the first complex signal CS1 within the specified bandwidth, and a second complex signal CS2, which is a complex signal on which carrier sensing is performed by the carrier sensing device 52, is obtained. The bandwidth regulator 51 downsamples the first complex signal CS1 to, for example, 48 kilo samples per second (kSPS), and band-limits the resultant signal within the band centered at 0 Hz to generate the second complex signal CS2. The bandwidth regulator 51 outputs the second complex signal CS2 to the carrier sensing device 52.

The carrier sensing device 52 converts the second complex signal CS2 acquired from the bandwidth regulator 51 into a real signal and detects a signal level of the real signal. The carrier sensing device 52 transmits the detected signal level to the determiner 17.

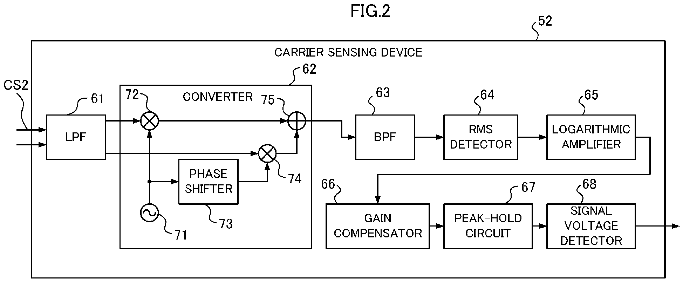

The carrier sensing device 52 includes, as illustrated in FIG. 2, a LPF 61, a converter 62, a BPF 63, a root mean square (RMS) detector 64, a logarithmic amplifier 65, a gain compensator 66, a peak-hold circuit 67, and a signal voltage detector 68.

The LPF 61 is applied to both positive frequencies and negative frequencies in the second complex signal CS2. For example, when a cutoff frequency of the LPF 61 is set to 10 kHz, the second complex signal CS2 that has passed through the LPF 61 is band-limited within a bandwidth of 20 kHz centered at 0 Hz.

The converter 62 converts the second complex signal CS2 that has passed through the LPF 61 to a real signal. More specifically, the converter 62 includes a local oscillator 71 that outputs a fixed-frequency reference signal for conversion, mixers 72 and 74, a phase shifter 73, and an adder 75.

The local oscillator 71 outputs the reference signal for conversion of 12 kHz to the mixer 72 and the phase shifter 73.

The mixer 72 multiplies the reference signal for conversion output from the local oscillator 71 by an I signal of the second complex signal CS2 that has passed through the LPF 61, and outputs the resultant signal to the adder 75.

The phase shifter 73 performs 90-degree shift on a phase of the reference signal for conversion output from the local oscillator 71 and outputs the resultant signal to the mixer 74.

The mixer 74 multiplies the reference signal for conversion after 90-degree phase shift by the phase shifter 73 by a Q signal of the second complex signal CS2 that has passed through the LPF 61, and outputs the resultant signal to the adder 75.

The adder 75 adds outputs from the mixers 72 and 74 to generate a real signal, and outputs the real signal to the BPF 63. The real signal exhibits a spectrum centered at a frequency of the reference signal for conversion output from the local oscillator 71. For example, the real signal exhibits a spectrum centered at 12 kHz.

The complex signal is converted into the real signal by the converter 62, which enables computational complexity in carrier sensing to be reduced.

The BPF 63 band-limits the real signal according to a bandwidth of the transmission band of the radio station 1 and outputs the real signal that has been band-limited to the RMS detector 64. When the radio station 1 performs communication in a narrowband mode the bandwidth of which is lower than 10 kHz, the BPF 63 band-limits the real signal within a bandwidth of 5 kHz or 10 kHz.

The RMS detector 64 applies a time window to the acquired real signal to detect an effective value of the real signal. The RMS detector 64 outputs the detected effective value to the logarithmic amplifier 65. A length of the time window is specified according to the length of time of the beacon used in wireless communication, that is, WLAN communication. More specifically, the length of the time window is equal to a minimum value of the length of time of the beacon output by wireless communication equipment, a WLAN device to be specific. The RMS detector 64 uses a time window, for example, the length of which is about 400 µsec, which is equivalent to 20 samples in 48 kSPS.

Preferably, the length of the time window is determined according to a minimum value of the length of time of the beacon actually transmitted by the WLAN device. In other words, when the minimum value of the length of time of the beacon actually transmitted by the WLAN device is greater than the minimum value of the length of time of a beacon, which is specified by WLAN standards, the length of the time window may be longer than the minimum value of the length of time of the beacon specified by WLAN standards. By setting the length of the time window equal to the minimum value of the length of time of the beacon, it is possible to suppress occurrence of a noise generated due to the time window being longer than a length of a signal. As a result, accuracy of carrier sensing improves.

The logarithmic amplifier 65 converts the effective value acquired from the RMS detector 64 into a value in dB and outputs the value in dB to the gain compensator 66.

The gain compensator 66 compensates a gain of a frequency component, the gain being attenuated during down-conversion by the reception processing circuit 11. The gain compensator 66 outputs the value in dB after gain compensation to the peak-hold circuit 67.

The peak-hold circuit 67 holds a peak value of the input value in dB for a certain period, for example, for 3 msec, and outputs the peak value to the signal voltage detector 68.

The signal voltage detector 68 detects a signal level of the output from the peak-hold circuit 67, specifically an amplitude of the output from the peak-hold circuit 67, and outputs the detected signal level to the determiner 17.

The determiner 17 determines whether the transmission band is used for the wireless communication from the signal level acquired from the detector 16. More specifically, the determiner 17 determines whether the signal level acquired from the detector 16 is equal to or greater than a threshold value. The threshold value may be determined according to a minimum value possible for an amplitude of a real signal, for example, when WLAN communication in accordance with OFDM is performed in the transmission band. When the signal level is equal to or greater than the threshold value, the transmission band of the radio station 1 can be considered that it is used for wireless communication. When the signal level is less than the threshold value, the transmission band of the radio station 1 can be considered that it is not used for wireless communication. The determiner 17 transmits the result of determination to the mode controller 18.

Since the carrier sensing device 52 included in the detector 16 includes the peak-hold circuit 67, even when the timing of detection by the detector 16 and the timing of acquisition of the signal level from the detector 16 by the determiner 17 are different, the determiner 17 can correctly acquire the peak value.

The mode controller 18 performs switching between a transmitting mode and a receiving mode in accordance with the result of determination acquired from the determiner 17 and an instruction of operation acquired from the operation device 19. When the mode controller 18 performs switching to the transmitting mode, the radio station 1 can transmit a radio wave from the antenna 10 by means of a transmitter circuit (not illustrated) to other communication equipment.

The operation device 19 accepts the instruction of operation, which is specifically an instruction of an operation in one of the transmitting mode and the receiving mode. When an operation in the transmitting mode is instructed, the operation device 19 accepts designation of the transmission frequency. Similarly, when an operation in the receiving mode is instructed, the operation device 19 accepts designation of a reception frequency.

When an operation in the transmitting mode is instructed and the operation device 19 accepts designation of the transmission frequency, the operation device 19 outputs an instruction of operation in the transmitting mode to the mode controller 18 and the frequency controller 20.

The frequency controller 20 controls the first oscillator 31 according to the transmission frequency, and adjusts the frequency of the first reference signal LOS1 output by the first oscillator 31. Specifically, the frequency controller 20 adjusts the frequency of the first reference signal LOS1 to a frequency of the IF signal generated when an electric signal the frequency of which is equal to the transmission frequency is input to the reception processing circuit 11. The frequency controller 20 controls the RF oscillator 32 according to the transmission frequency, and adjusts the frequency of the RF reference signal output by the RF oscillator 32.

The first oscillator 31 and the RF oscillator 32 are local oscillators the frequency of which can be changed by a control by the frequency controller 20.

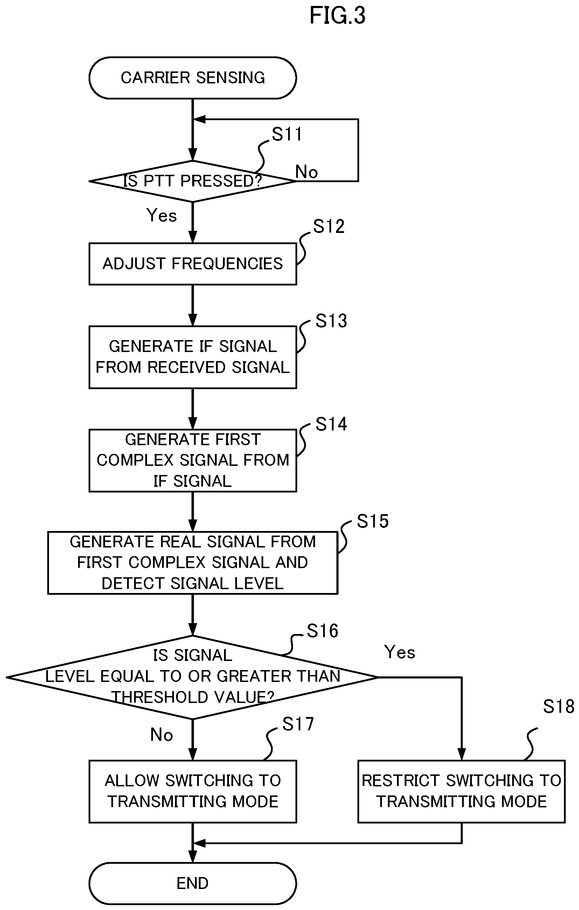

In order to avoid interference with WLAN communication, when the operation device 19 accepts an instruction to perform transmission in the transmitting mode, the radio station 1 having the configuration described above starts carrier-sense processing. As illustrated in FIG. 3, the operation device 19 repeats processing in Step S11 while Push to Talk (PTT) is not pressed (Step S11: No). When PTT provided in the operation device 19 is pressed (Step S11: Yes), the operation device 19 transmits a value of the transmission frequency to the frequency controller 20, and the frequency controller 20 adjusts the frequencies of the first reference signal LOS1 and the RF reference signal according to the transmission frequency (Step S12).

The frequency controller 20 controls the first oscillator 31 according to the transmission frequency to adjust the frequency of the first reference signal LOS1. Specifically, the frequency controller 20 adjusts the frequency of the first reference signal LOS1 to the frequency of the IF signal generated when an electric signal the frequency of which is equal to the transmission frequency is input to the reception processing circuit 11.

The frequency controller 20 controls the RF oscillator 32 according to the transmission frequency to adjust the frequency of the RF reference signal. Specifically, the frequency controller 20 adjusts the frequency of the RF reference signal in such a way that the frequency of the electric signal output by the receiver 41 is within a frequency range that can be processed by the ADC 42.

The reception processing circuit 11 digitally converts the electric signal acquired from the antenna 10, down-converts the resultant signal, and generates an IF signal (Step S13). The reception processing circuit 11 outputs the IF signal to the extractor 12.

The extractor 12 performs complex frequency conversion on the IF signal using the first reference signal LOS1 output from the first oscillator 31, and band-limits the resultant signal to generate the first complex signal CS1 (Step S14). Since the frequency of the first reference signal LOS1 is adjusted according to the transmission frequency in Step S12, the first complex signal CS1 generated in Step S14 exhibits a spectrum centered at a frequency component of the transmission frequency.

The detector 16 generates a real signal from the first complex signal CS1 and detects a signal level of the real signal (Step S15). The detector 16 detects the signal level of the real signal obtained from the first complex signal CS1 exhibiting a spectrum centered at the frequency component of the transmission frequency.

The determiner 17 determines whether the signal level is equal to or greater than the threshold value (Step S16). When the signal level is less than the threshold value (Step S16: No), it can be considered that no wireless communication is performed in the transmission band, and the mode controller 18 allows switching to the transmitting mode (Step S17). As a result, the radio station 1 can perform transmission in the transmission band containing the transmission frequency designated at the operation device 19.

When the signal level is equal to or greater than the threshold value (Step S16: Yes), it can be considered that wireless communication is performed in the transmission band, and the mode controller 18 does not allow switching to the transmitting mode (Step S18). As a result, transmission by the radio station 1 is prevented while wireless communication is performed in the transmission band containing the transmission frequency designated at the operation device 19.

As described above, the radio station 1 according to Embodiment 1 detects a signal level of a real signal by using a time window specified according to a length of time of a beacon used in wireless communication, which enables accuracy of carrier sensing to improve.

In addition to those described above, various variations of the radio station 1 according to Embodiment 1 may be made. First, when a frequency of an electric signal is within a frequency band that can be processed by the ADC 42, the receiver 41 does not have to perform frequency conversion. In this case, the radio station 1 does not have to include the RF oscillator 32.

Second, a circuit provided between the antenna 10 and the detector 16 may be any circuit as long as the circuit enables the detector 16 to perform carrier sensing at the target frequency.

### Embodiment 2

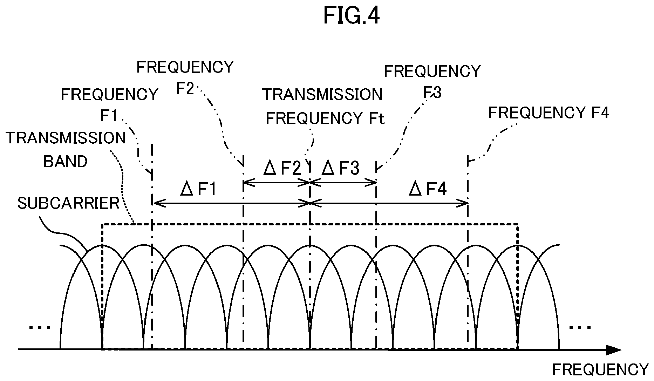

The radio station 1 according to Embodiment 2 operates in one of a narrowband mode in which communication is performed in a narrow band and a wideband mode in which communication is performed in a band wider than in the narrowband mode. The wideband mode is, for example, an Amateur Television (ATV) mode that uses a transmission band of 17 MHz. When the radio station 1 according to Embodiment 2 operates in the wideband mode, as illustrated in FIG. 4, the radio station 1 performs carrier sensing at a plurality of frequencies within the transmission band. The radio station 1 that can perform carrier sensing at a plurality of frequencies is described in Embodiment 2 with a focus on the difference from the radio station 1 according to Embodiment 1.

More specifically, the radio station 1 performs carrier sensing at a transmission frequency Ft and frequencies F1, F2, F3, F4 that are respectively shifted by ΔF1, ΔF2, ΔF3, ΔF4 from the transmission frequency Ft.

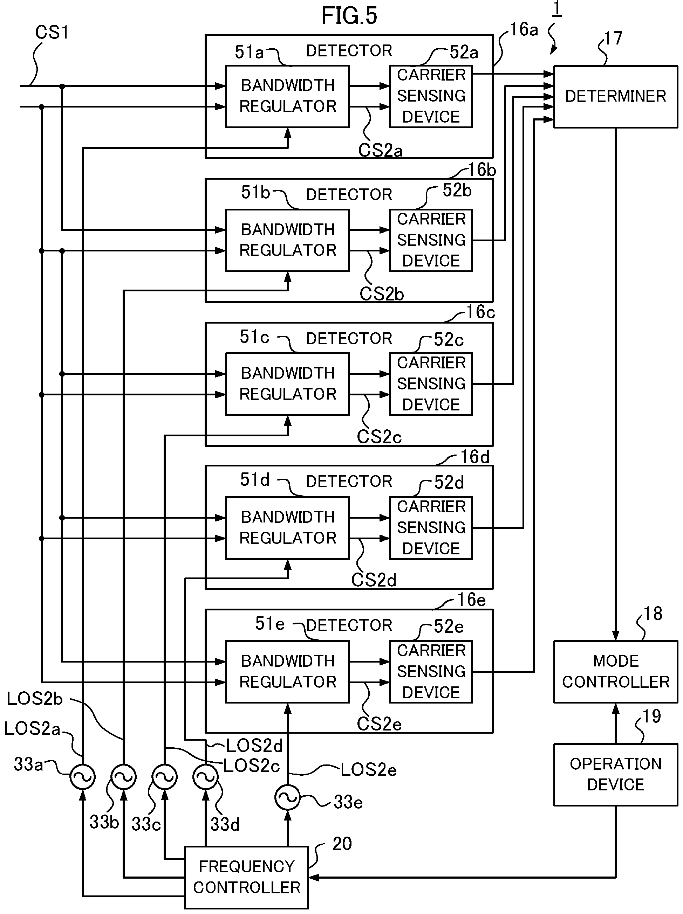

In order to perform carrier sensing at the plurality of frequencies at the same timing, as illustrated in FIG. 5 illustrating a portion of a configuration of the radio station 1 according to Embodiment 2, the radio station 1 includes a plurality of detectors, specifically, detectors 16a, 16b, 16c, 16d, 16e and second variable-frequency oscillators 33a, 33b, 33c, 33d, 33e that respectively output second reference signals LOS2a, LOS2b, LOS2c, LOS2d, LOS2e to the detectors 16a, 16b, 16c, 16d, 16e. The detectors 16a, 16b, 16c, 16d, 16e are individually associated with a different one of the second oscillators 33a, 33b, 33c, 33d, 33e. Specifically, the detectors 16a, 16b, 16c, 16d, 16e are respectively associated with the second oscillators 33a, 33b, 33c, 33d, 33e.

The operation device 19 accepts the instruction of operation, which is specifically an instruction of an operation in one of the transmitting mode and the receiving mode. When an operation in the transmitting mode is instructed, the operation device 19 accepts designation of the transmission frequency as well as an instruction to perform transmission in one of the narrowband mode and the wideband mode. Similarly, when an operation in the receiving mode is instructed, the operation device 19 accepts designation of a reception frequency as well as an instruction to perform reception in one of the narrowband mode and the wideband mode.

The frequency controller 20 controls the second oscillators 33a, 33b, 33c, 33d, 33e according to difference between the transmission frequency and a frequency at which carrier sensing is performed, and adjusts frequencies the second reference signals LOS2a, LOS2b, LOS2c, LOS2d, LOS2e respectively output by the second oscillators 33a, 33b, 33c, 33d, 33e.

More specifically, the frequency controller 20 controls the second oscillator 33a to adjust a frequency of the second reference signal LOS2a to 0 Hz.

The frequency controller 20 controls the second oscillator 33b according to the difference ΔF1 between the frequency F1 and the transmission frequency Ft to adjust a frequency of the second reference signal LOS2b. Specifically, the frequency controller 20 adjusts the frequency of the second reference signal LOS2b to the difference ΔF1 between the frequency F1 and the transmission frequency Ft.

The frequency controller 20 controls the second oscillator 33c according to the difference ΔF2 between the frequency F2 and the transmission frequency Ft to adjust a frequency of the second reference signal LOS2c. Specifically, the frequency controller 20 adjusts the frequency of the second reference signal LOS2c to the difference ΔF2 between the frequency F2 and the transmission frequency Ft.

The frequency controller 20 controls the second oscillator 33d according to the difference ΔF3 between the frequency F3 and the transmission frequency Ft to adjust a frequency of the second reference signal LOS2d. Specifically, the frequency controller 20 adjusts the frequency of the second reference signal LOS2d to the difference ΔF3 between the frequency F3 and the transmission frequency Ft.

The frequency controller 20 controls the second oscillator 33e according to the difference ΔF4 between the frequency F4 and the transmission frequency Ft to adjust a frequency of the second reference signal LOS2e. Specifically, the frequency controller 20 adjusts the frequency of the second reference signal LOS2e to the difference ΔF4 between the frequency F4 and the transmission frequency Ft.

The configurations of the detectors 16a, 16b, 16c, 16d, 16e are similar to that of the detector 16 included in the radio station 1 according to Embodiment 1. More specifically, the detector 16a includes a bandwidth regulator 51a and a carrier sensing device 52a. The detector 16b includes a bandwidth regulator 51b and a carrier sensing device 52b. The detector 16c includes a bandwidth regulator 51c and a carrier sensing device 52c. The detector 16d includes a bandwidth regulator 51d and a carrier sensing device 52d. The detector 16e includes a bandwidth regulator 51e and a carrier sensing device 52e.

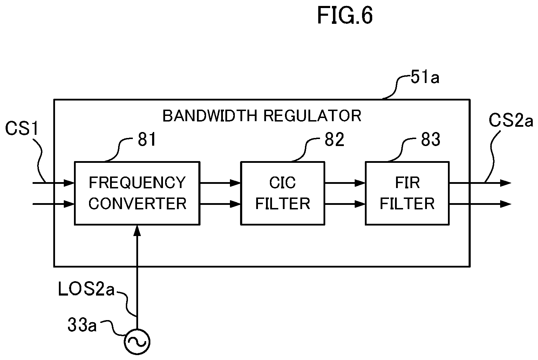

Since the configurations of the bandwidth regulators 51a to 5 1e are the same, the configuration of the bandwidth regulator 51a is illustrated in FIG. 6. As illustrated in FIG. 6, the bandwidth regulator 51a includes a frequency converter 81, a Cascaded Integrator-Comb (CIC) filter 82, and a Finite Impulse Response (FIR) filter 83. The frequency converter 81 performs complex frequency conversion on the first complex signal CS1 using the second reference signal LOS2a output from the second oscillator 33a. The first complex signal CS1 on which the frequency converter 81 has performed complex frequency conversion is band-limited by the CIC filter 82 and the FIR filter 83 to be output as a second complex signal CS2a to the carrier sensing device 52a.

The second complex signal CS2a output by the bandwidth regulator 51a is a complex signal exhibiting a spectrum centered at a frequency component of the second reference signal LOS2a. Since the first complex signal CS1 input by the extractor 12 to the bandwidth regulator 51a exhibits a spectrum centered at the frequency component of the transmission frequency Ft, when the frequency of the second reference signal LOS2a is adjusted to 0 Hz as described above, the second complex signal CS2a output by the bandwidth regulator 51a exhibits a spectrum centered at the frequency component of the transmission frequency Ft.

Similarly, a second complex signal CS2b output by the bandwidth regulator 51b is a complex signal exhibiting a spectrum centered at a frequency component of the second reference signal LOS2b. Since the first complex signal CS1 input by the extractor 12 to the bandwidth regulator 51b exhibits a spectrum centered at the frequency component of the transmission frequency Ft, when the frequency of the second reference signal LOS2b is adjusted to the difference ΔF1 between the frequency F1 and the transmission frequency Ft as described above, the second complex signal CS2b output by the bandwidth regulator 51b exhibits a spectrum centered at a frequency component of the frequency F1.

Similarly, a second complex signal CS2c output by the bandwidth regulator 51c is a complex signal exhibiting a spectrum centered at a frequency component of the second reference signal LOS2c. Since the first complex signal CS1 input by the extractor 12 to the bandwidth regulator 51c exhibits a spectrum centered at the frequency component of the transmission frequency Ft, when the frequency of the second reference signal LOS2c is adjusted to the difference ΔF2 between the frequency F2 and the transmission frequency Ft as described above, the second complex signal CS2c output by the bandwidth regulator 51c exhibits a spectrum centered at a frequency component of the frequency F2.

Similarly, a second complex signal CS2d output by the bandwidth regulator 51d is a complex signal exhibiting a spectrum centered at a frequency component of the second reference signal LOS2d. Since the first complex signal CS1 input by the extractor 12 to the bandwidth regulator 51d exhibits a spectrum centered at the frequency component of the transmission frequency Ft, when the frequency of the second reference signal LOS2d is adjusted to the difference ΔF3 between the frequency F3 and the transmission frequency Ft as described above, the second complex signal CS2d output by the bandwidth regulator 51d exhibits a spectrum centered at a frequency component of the frequency F3.

Similarly, a second complex signal CS2e output by the bandwidth regulator 51e is a complex signal exhibiting a spectrum centered at a frequency component of the second reference signal LOS2e. Since the first complex signal CS1 input by the extractor 12 to the bandwidth regulator 51e exhibits a spectrum centered at the frequency component of the transmission frequency Ft, when the frequency of the second reference signal LOS2e is adjusted to the difference ΔF4 between the frequency F4 and the transmission frequency Ft as described above, the second complex signal CS2e output by the bandwidth regulator 51e exhibits a spectrum centered at a frequency component of the frequency F4.

The configuration of the carrier sensing device 52a is similar to that of the carrier sensing device 52 included in the detector 16 included in the radio station 1 according to Embodiment 1. A bandwidth of the BPF 63 included in the carrier sensing device 52a is set according to the transmission band in the narrowband mode, for example, 5 kHz or 10 kHz.

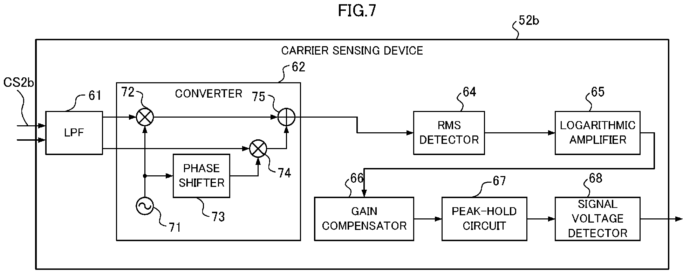

The configurations of the carrier sensing devices 52b to 52e are the same, and as illustrated in FIG. 7, they are the same as the configuration of the carrier sensing device 52 illustrated in FIG. 2 except that the BPF 63 is removed.

The carrier sensing devices 52a to 52e having the configuration described above respectively perform carrier sensing at the transmission frequency Ft and the frequencies F1, F2, F3, F4. In other words, the carrier sensing devices 52a to 52e individually detect a signal level of a real signal in bands that respectively contain the transmission frequency Ft and the frequencies F1, F2, F3, F4, and outputs the signal levels to the determiner 17.

The determiner 17 determines whether the transmission band is used for wireless communication from the signal level detected by each of the detectors 16a, 16b, 16c, 16d, 16e. More specifically, the determiner 17 determines whether each of the signal levels acquired from the detectors 16a, 16b, 16c, 16d, 16e is equal to or greater than a threshold value. When at least one of the signal levels is equal to or greater than the threshold value, the transmission band of the radio station 1 can be considered that it is used for wireless communication. The determiner 17 transmits the result of determination to the mode controller 18.

As described above, the radio station 1 according to Embodiment 2 performs carrier sensing at a plurality of frequencies at the same timing in the wideband mode, which suppresses increase of processing time for the carrier sensing while enabling accuracy of the carrier sensing to improve.

In the radio station 1 according to Embodiment 2, the configurations of the bandwidth regulators 51a, 51b, 51c, 51d, 51e are the same, and the configurations of the carrier sensing devices 52b, 52c, 52d, 52e are the same. The only difference between the carrier sensing device 52a and the carrier sensing devices 52b to 52e is the BPF63. This suppresses complicating the configuration of the radio station 1 and complicating a manufacturing process.

In addition to those described above, various variations of the radio station 1 according to Embodiment 2 may be made.

First, any number of the detectors may be provided and the number of the detectors may be determined according to the transmission band of the radio station 1, a suitable bandwidth for performing carrier sensing by the carrier sensing device 52, or the like. For example, the radio station 1 may include only the detectors 16a, 16b, and 16c among the detectors 16a to 16e illustrated in FIG. 5.

Second, the radio station 1 may determine, as described above, whether wireless communication is performed in the transmission band from the signal level detected by each of the detectors 16a to 16e when performing transmission in the wideband mode, and may determine whether wireless communication is performed in the transmission band only from the signal level detected by the detector 16a when performing transmission in the narrowband mode.

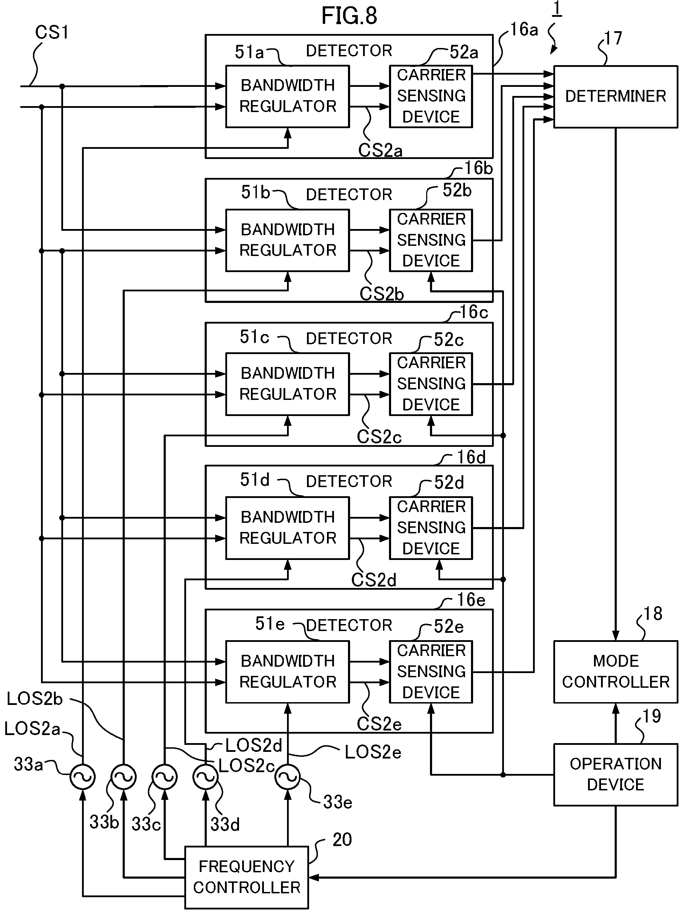

More specifically, as illustrated in FIG. 8, the operation device 19 outputs a value of the transmission frequency as well as an instruction of operation in the transmitting mode to perform transmission in the designated one of the narrowband mode and the wideband mode to the frequency controller 20 and the carrier sensing devices 52b, 52c, 52d, 52e respectively included in the detectors 16b, 16c, 16d, 16e. When the carrier sensing devices 52b, 52c, 52d, 52e acquire the instruction of operation in the transmitting mode to perform transmission in the wideband mode from the operation device 19, the carrier sensing devices 52b, 52c, 52d, 52e detect a signal level of a real signal. When the carrier sensing devices 52b, 52c, 52d, 52e acquire the instruction of operation in the transmitting mode to perform transmission in the narrowband mode from the operation device 19, the carrier sensing devices 52b, 52c, 52d, 52e do not detect a signal level of a real signal. In this manner, the radio station 1 can perform carrier sensing across the transmission band in the wideband mode when performing transmission in the wideband mode, and perform carrier sensing only at the transmission frequency when performing transmission in the narrowband mode.

Third, the determiner 17 may determine, using a threshold value determined for each of the detectors 16a to 16e, whether the signal level detected by each of the detectors 16a to 16e is equal to or greater than the threshold value for each of the detectors 16a to 16e. Using a threshold value for a frequency band enables accuracy of carrier sensing to improve.

The variation examples described for Embodiment 1 are applicable to Embodiment 2. Specifically, in the radio station 1 according to Embodiment 2, when a frequency of an electric signal is within a frequency band that can be processed by the ADC 42, the receiver 41 does not have to perform frequency conversion. In this case, the radio station 1 does not have to include the RF oscillator 32.

Further, a circuit provided between the antenna 10 and the detector 16 may be any circuit as long as the circuit enables the detector 16 to perform carrier sensing at the transmission frequency.

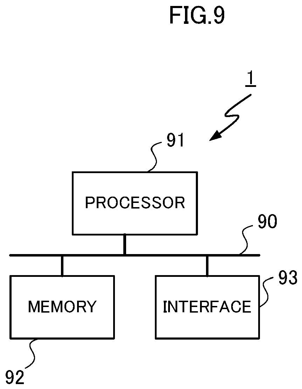

As illustrated in FIG. 9, each of the radio stations 1 described above includes a processor 91, a memory 92, and an interface 93 as hardware components for controlling individual components. The processor 91, the memory 92, and the interface 93 are interconnected via a bus 90. The processor 91 includes transistors and other electronic circuits therein and is considered circuitry or processing circuitry.

For example, functions of the radio station 1 are implemented by executing, by the processor 91 that is a programmed processor, a program stored in the memory 92.

For example, the interface 93 is for connecting other communication equipment, an external device, or the like to establish communication. The interface 93 includes a plurality of types of interface modules as appropriate.

In the example illustrated in FIG. 9, although the radio station 1 includes a single processor 91 and a single memory 92, the radio station 1 may include a plurality of processors 91 and a plurality of memories 92. In this case, functions of the radio station 1 may be implemented by cooperation between the processors 91 and the memories 92.

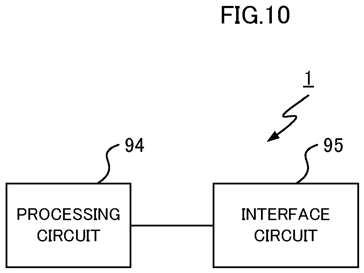

As illustrated in FIG. 10, the radio station 1 may be implemented by a processing circuit 94. The processing circuit 94 is connected to other communication equipment, an external device, or the like via an interface circuit 95.

When the processing circuit 94 is dedicated hardware, the processing circuit 94 includes a single circuit, a composite circuit, a processor, an Application Specific Integrated Circuit (ASIC), a Field Programmable Gate Array (FPGA), or a combination thereof. Individual components of the radio station 1 may be implemented by separate processing circuits 94; alternatively, individual components of the radio station 1 may be implemented by a common processing circuit 94.

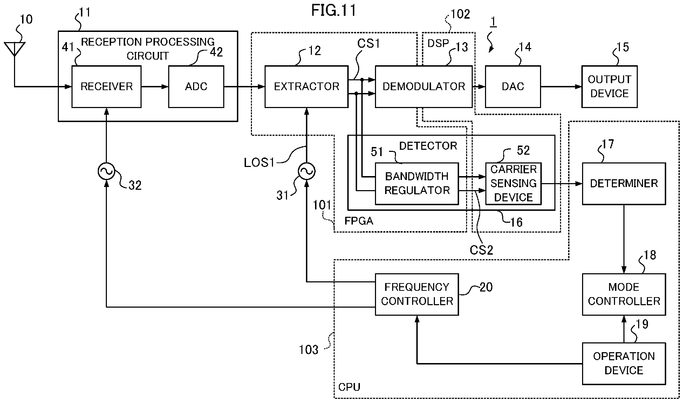

Some functions of the radio station 1 may be implemented by dedicated hardware and functions other than those may be implemented by software or firmware. For example, as illustrated in FIG. 11, in the radio station 1, the extractor 12, some functions of the demodulator 13, and the bandwidth regulator 51 may be implemented by a FPGA 101; functions other than those of the demodulator 13 and the carrier sensing device 52 may be implemented by a Digital Signal Processor (DSP) 102; and the determiner 17, the mode controller 18, the operation device 19, and the frequency controller 20 may be implemented by a Central Processing Unit (CPU) 103. The functions of the demodulator 13 implemented by the FPGA 101 cause, for example, a band on which demodulation processing is executed to be band-limited by the CIC filter and the FIR filter and cause the first complex signal CS1 that has been band-limited to be downsampled. The other functions of the demodulator 13 implemented by the DSP 102 cause demodulation processing to be executed on the first complex signal CS1 that has been band-limited and downsampled.

Besides, the hardware configurations and the flowcharts described above are merely examples and any changes and modifications may be made.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

## Claims

1. A radio station (1), comprising:
a detector (16, 16a, 16b, 16c, 16d, 16e) to detect a signal level, at a designated transmission frequency, of a real signal obtained as a result of digitally converting an electric signal derived from a radio wave captured by an antenna (10) by applying a time window specified according to a length of time of a beacon used in wireless communication to the real signal; and
a determiner (17) to determine whether a transmission band containing the transmission frequency is used for the wireless communication from the signal level detected by the detector (16, 16a, 16b, 16c, 16d, 16e).

2. The radio station (1) according to claim 1, wherein
the detector (16, 16a, 16b, 16c, 16d, 16e) detects the signal level by applying the time window having a length equal to a minimum value of the length of time of the beacon output by wireless communication equipment that performs the wireless communication to the real signal.

3. The radio station (1) according to claim 1 or 2, wherein
the detector (16, 16a, 16b, 16c, 16d, 16e) detects the signal level by applying the time window specified according to the length of time of the beacon used in WLAN communication in accordance with Orthogonal Frequency Division Multiplexing to the real signal.

4. The radio station (1) according to any one of claims 1 to 3, further comprising:
a reception processing circuit (11) to digitally convert the electric signal derived from the radio wave captured by the antenna (10), down-convert the resultant signal, and generate an IF signal in an intermediate frequency band;
a first variable-frequency oscillator (31) to output a first reference signal (LOS1);
an extractor (12) to perform complex frequency conversion on the IF signal using the first reference signal (LOS1) and band-limit the resultant signal within a specified bandwidth centered at a frequency of the first reference signal (LOS1) to generate a first complex signal (CS1); and
a frequency controller (20) to adjust the frequency of the first reference signal (LOS1) according to the designated transmission frequency, wherein
the detector (16) detects the signal level by applying the time window to the real signal obtained from the first complex signal (CS1).

5. The radio station (1) according to claim 4, further comprising:
a plurality of second variable-frequency oscillators (32a, 32b, 32c, 32d, 32e) to respectively output second reference signals (LOS2a, LOS2b, LOS2c, LOS2d, LOS2e) each having a different frequency, wherein
the radio station (1) comprises a plurality of the detectors (16a, 16b, 16c, 16d, 16e) each acquiring the second reference signal (LOS2a, LOS2b, LOS2c, LOS2d, LOS2e) from a corresponding one of the second variable-frequency oscillators (32a, 32b, 32c, 32d, 32e),
the frequency controller (20) adjusts a frequency of the second reference signal (LOS2a, LOS2b, LOS2c, LOS2d, LOS2e) output from each of the second variable-frequency oscillators (32a, 32b, 32c, 32d, 32e) according to the transmission frequency and a bandwidth of the transmission band containing the transmission frequency,
the detectors (16a, 16b, 16c, 16d, 16e) each detects the signal level by applying the time window to the real signal obtained as a result of complex frequency conversion on the first complex signal (CS1) using the second reference signal (LOS2a, LOS2b, LOS2c, LOS2d, LOS2e), and
the determiner (17) determines whether the transmission band is used for the wireless communication from the signal level detected by each of the detectors (16a, 16b, 16c, 16d, 16e).

6. The radio station (1) according to claim 5, wherein
the frequency controller (20) adjusts the frequency of the second reference signal (LOS2a, LOS2b, LOS2c, LOS2d, LOS2e) output from any one of the second variable-frequency oscillators (32a, 32b, 32c, 32d, 32e) in such a way that a complex signal obtained as a result of complex frequency conversion on the first complex signal (CS1) using the second reference signal (LOS2a, LOS2b, LOS2c, LOS2d, LOS2e) exhibits a spectrum centered at a frequency component of the transmission frequency.

7. The radio station (1) according to any one of claims 1 to 6, further comprising:
an operation device (19) to accept designation of the transmission frequency as well as an instruction to perform transmission in one of a narrowband mode and a wideband mode in which the transmission band is wider than in the narrowband mode, wherein
when transmission in the wideband mode is designated at the operation device (19), the determiner (17) determines whether the transmission band is used for the wireless communication from the signal level detected by each of the detectors (16, 16a, 16b, 16c, 16d, 16e), and when transmission in the narrowband mode is designated at the operation device (19), the determiner (17) determines whether the transmission band is used for the wireless communication from the signal level detected by applying the time window to the real signal obtained from the complex signal exhibiting a spectrum centered at a frequency component of the transmission frequency.

8. A carrier sensing method performed by a radio station (1), the method comprising:
detecting a signal level, at a designated transmission frequency, of a real signal obtained as a result of digitally converting an electric signal derived from a radio wave captured by an antenna (10) by applying a time window specified according to a length of time of a beacon used in wireless communication to the real signal; and
determining whether a transmission band containing the transmission frequency is used for the wireless communication from the signal level.
